# FASCICULE DE BREVET EUROPEEN

(11) **EP 3 224 068 B1**
(45) Date de publication et mention de la délivrance du brevet: **12.08.2020**
(21) Numéro de dépôt: 15785141.1
(22) Date de dépôt: 28.10.2015
(51) Int. Cl.: B60H 3/00, F28G 9/00, B60H 1/00

(54) **DISPOSITIF DE CHAUFFAGE, VENTILATION ET/OU CLIMATISATION POUR UN VEHICULE AUTOMOBILE**
HEIZUNGS-, LÜFTUNGS- UND/ODER KLIMATISIERUNGSVORRICHTUNG FÜR EIN KRAFTFAHRZEUG
HEATING, VENTILATION AND/OR AIR-CONDITIONING DEVICE FOR A MOTOR VEHICLE

(30) Priorité: 28.11.2014 FR 1461662
(43) Date de publication de la demande: 04.10.2017
(73) Titulaire: Valeo Systemes Thermiques, 78320 Le Mesnil Saint Denis (FR)
(72) Inventeur: BRAULT, Julien, 78322 Le Mesnil Saint-Denis cedex (FR); PERNET, Stéphane, 78322 Le Mesnil Saint-Denis cedex (FR)
(74) Mandataire: Tran, Chi-Hai
(86) Numéro de dépôt international: PCT/EP2015/074935
(87) Numéro de publication internationale: WO 2016/083059

(56) Documents cités:
- EP-A1- 0 816 148
- JP-A- 2000 230 199

## Description

La présente invention concerne un dispositif de chauffage, ventilation et/ou climatisation pour un véhicule automobile.

Un véhicule automobile comporte un habitacle dans lequel débouche de l'air issu classiquement d'un dispositif de chauffage, ventilation et/ou climatisation.

Le véhicule comporte notamment une ou plusieurs buses de dégivrage situées à proximité du pare-brise, des aérateurs situés au niveau de la planche de bord et destinés à délivrer de l'air au conducteur et au passager, et des buses situées au niveau des pieds du conducteur et du passager (buses de pieds).

Le dispositif de chauffage, ventilation et/ou climatisation, également appelé HVAC (pour Heating, Ventilation and Air-Conditioning, en anglais) peut être alimenté soit en air extérieur au véhicule (également appelé air neuf), soit en air de recyclage, c'est-à-dire issu de l'habitacle du véhicule.

L'air extérieur est généralement peu chargé en humidité, lorsqu'il est froid, par comparaison avec l'air de recyclage, mais peut être relativement froid, en particulier en conditions hivernales. L'air de recyclage a généralement un taux d'humidité supérieur à l'air extérieur, et est à une température proche de la température à atteindre, c'est-à-dire proche de la température de consigne définie par exemple par le conducteur ou le passager.

Suivant les conditions de fonctionnement, il peut donc être particulièrement intéressant d'utiliser de l'air extérieur pour l'introduire dans l'habitacle au niveau des buses de dégivrage situées à proximité du pare-brise, après chauffage au travers du dispositif précité par exemple. Le taux d'humidité de l'air frais étant relativement faible, le risque de générer de la buée sur le pare-brise est donc également faible.

A l'inverse, il peut être avantageux d'utiliser de l'air de recyclage pour le rejeter dans l'habitacle au niveau des buses de pieds. De cette manière, même en conditions hivernales et lorsqu'un débit d'air important est demandé par le conducteur ou le passager, il est possible de réchauffer plus rapidement cet air de recyclage à la température de consigne avant qu'il ne soit rejeté dans l'habitacle. Le confort pour les utilisateurs est grandement amélioré et le risque de générer de la buée sur le pare-brise est faible, cet air de recyclage étant rejeté à distance du pare-brise.

Afin de profiter de tels avantages, il est important de pouvoir dissocier les flux d'air (air extérieur - air de recyclage), en particulier lors du passage desdits flux d'air au travers du dispositif de chauffage, ventilation et/ou climatisation.

Un dispositif de chauffage, ventilation et/ou climatisation, également appelé HVAC (pour Heating, Ventilation and Air-Conditioning, en anglais) comporte classiquement un unique canal de circulation d'air équipé d'une roue à ailettes entraînée en rotation par un moteur électrique afin de pulser l'air dans le canal de circulation d'air.

Un évaporateur est généralement situé en aval du canal de circulation d'air, ledit évaporateur permettant d'échanger de la chaleur entre l'air circulant dans le canal et l'air extérieur au véhicule.

En fonctionnement, de l'eau se condense dans l'évaporateur, formant un terrain favorable au développement de bactéries et de mauvaises odeurs. Une partie de ces bactéries et odeurs peut alors être entrainée avec le flux d'air et contaminer l'ensemble du circuit de ventilation ainsi que l'habitacle.

Afin de remédier à cet inconvénient, il est connu de nettoyer l'évaporateur en injectant un produit de nettoyage dans le circuit de ventilation. La zone d'injection d'un tel produit peut varier en fonction des applications. Un tel dispositif es connu du document EP 0 816 148 A1.

Afin de garantir la séparation entre les deux flux d'air, tout en assurant la fonction de nettoyage, l'invention propose un dispositif de chauffage, ventilation et/ou climatisation pour un véhicule automobile selon la revendication 1, comprenant au moins un premier canal de circulation d'air, au moins un second canal de circulation d'air, des moyens de génération d'un flux d'air dans le premier canal de circulation d'air et/ou dans le second canal de circulation d'air, le dispositif comportant en outre des moyens d'entrée d'un produit nettoyant débouchant dans le premier canal de circulation d'air et/ou dans le second canal de circulation d'air.

Un produit nettoyant peut ainsi être injecté dans le premier canal de circulation d'air et/ou dans le second canal de circulation d'air.

De préférence, au moins un évaporateur est situé en aval du premier canal de circulation d'air et/ou en aval du second canal de circulation d'air, les moyens d'entrée du produit nettoyant étant situés en amont de l'évaporateur, dans le sens de circulation du flux d'air correspondant.

De plus, les moyens d'entrée du produit nettoyant sont situés en aval des moyens de génération du flux d'air correspondant, dans le sens de circulation dudit flux d'air.

Les moyens d'entrée du produit nettoyant comportent deux canaux d'amenée de produit nettoyant débouchant dans le canal de circulation d'air correspondant et une partie de raccordement séparée dudit canal d'amenée par des moyens d'obturation.

Ainsi, lorsque le nettoyage doit être effectué, il convient de retirer les moyens d'obturation afin de pouvoir injecter le produit nettoyant.

De préférence, les moyens d'obturation comportent au moins une paroi apte à être perforée.

Le canal d'amenée de produit nettoyant peut comporter une portion coudée en forme générale d'arc de cercle.

De cette manière, si le produit est injecté par l'intermédiaire d'un tube flexible, ledit tube peut être introduit dans la partie de raccordement et dans le canal d'amenée, en étant guidé par la portion coudée.

Selon l'invention, le dispositif comporte un premier canal d'amenée de produit nettoyant débouchant dans le premier canal de circulation d'air et un second canal d'amenée de produit nettoyant débouchant dans le second canal de circulation d'air, le premier canal de circulation d'air étant formé, au moins en partie, par une première volute, le second canal de circulation d'air étant formé, au moins en partie, par une seconde volute, les premier et second canaux de circulation d'air étant séparés l'un de l'autre, au moins en partie, par une cloison de séparation.

Dans ce cas, le premier canal d'amenée de produit nettoyant et le second canal d'amenée de produit nettoyant peuvent venir de matière, au moins en partie, avec la cloison de séparation.

En particulier, la paroi de séparation peut former un moyen de séparation desdits canaux d'amenée de produit nettoyant.

Par ailleurs, le premier canal d'amenée de produit nettoyant, le second canal d'amenée de produit nettoyant, les parties de raccordement correspondantes et/ou les moyens d'obturation correspondants, peuvent venir de matière, au moins en partie, avec la première volute et/ou avec la la seconde volute.

On réduit ainsi le nombre de pièces à fabriquer et à assembler. La cloison de séparation et les volutes peuvent être en matériau plastique et être réalisées par moulage par injection, par exemple.

L'invention concerne également un véhicule automobile comportant au moins un dispositif du type précité.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique en coupe d'un dispositif selon une forme de réalisation de l'invention,
- la figure 2 est une vue en perspective d'une partie du dispositif de la figure 1,

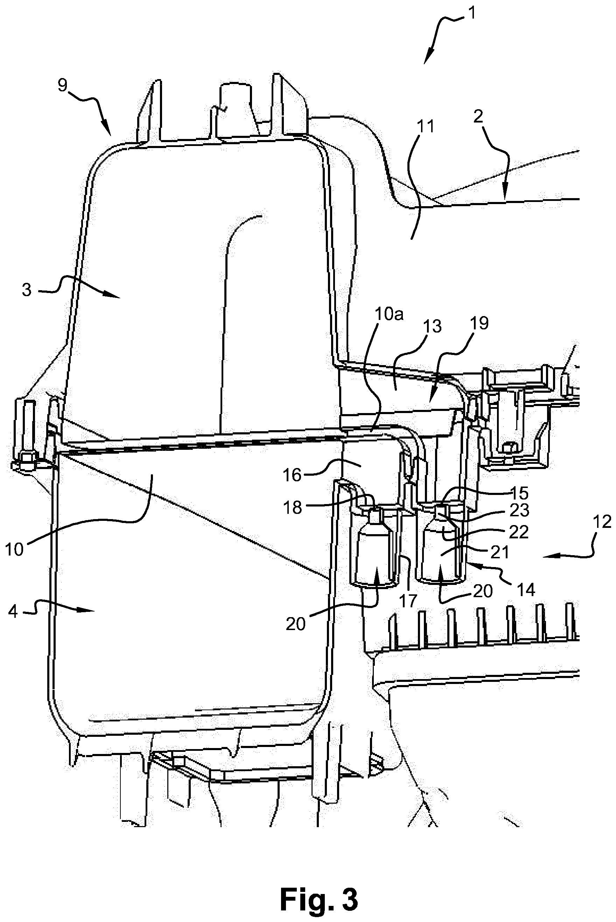

- la figure 3 est une vue en coupe et en perspective d'une partie du dispositif de la figure 1,

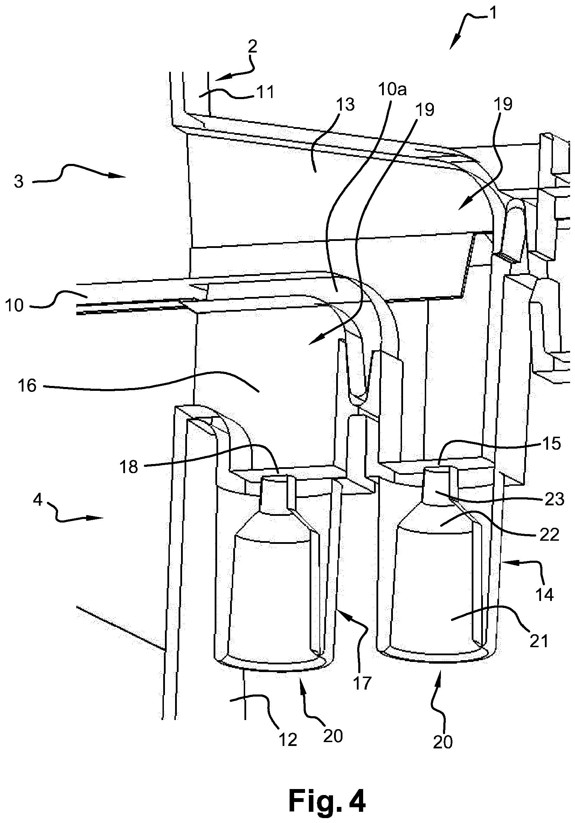

- la figure 4 est une vue de détail illustrant plus particulièrement les moyens d'entrée du produit nettoyant.

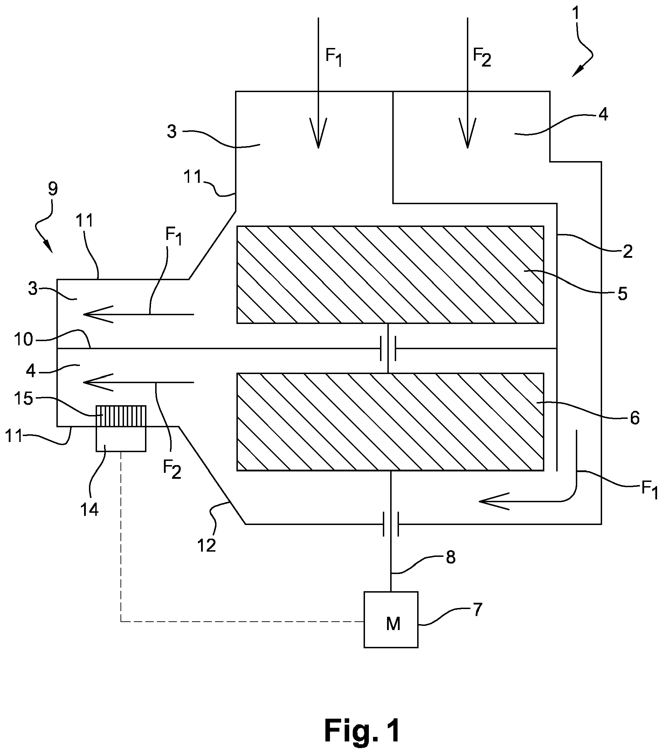

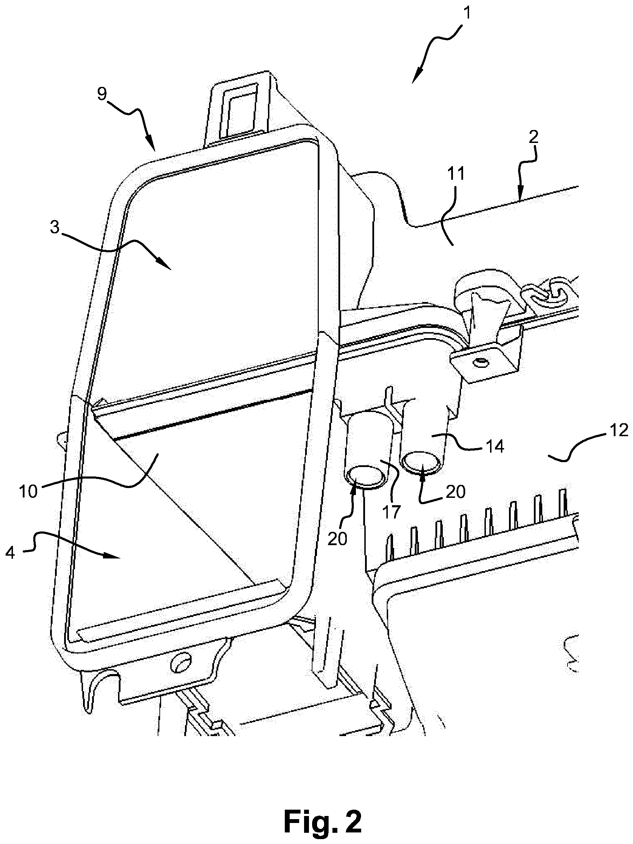

Un dispositif de chauffage, ventilation et/ou climatisation 1 selon une première forme de réalisation est illustré aux figures 1 et 2. Celui-ci est destiné à équiper un véhicule automobile et comporte un corps 2 délimitant un premier canal de circulation de fluide 3 et un second canal de circulation de fluide 4. Le corps comprend des moyens aptes à pulser l'air. Ces moyens comprennent une première roue à ailettes 5 montée dans le premier canal de circulation de fluide 3 et une seconde roue à ailettes 6 montée dans le second canal de circulation de fluide 4, ces deux roues 5, 6 étant entraînées par un même moteur électrique 7.

Plus particulièrement, selon le mode de réalisation illustré en figure 1, le moteur 7 comporte un arbre de transmission 8 faisant saillie d'un seul côté du moteur 7 et sur lequel sont fixées la première roue 5 et la seconde roue 6. En variante, le moteur 7 peut comporter un arbre de transmission faisant saillie de part et d'autre du moteur 7, respectivement au niveau d'une première partie couplée à la première roue 5 et d'une seconde partie couplée à la seconde roue 6.

Le corps 2 comporte une zone aval 9, c'est-à-dire située en aval des roues à ailettes 5, 6 dans le sens de circulation des flux d'air correspondants F1, F2. Les premier et second canaux de circulation d'air 3, 4 sont séparés, au moins dans la zone aval 9 du corps 2, par une paroi de séparation 10 formée d'une seule pièce en matériau plastique, par exemple par injection.

Le premier canal de circulation d'air 3 est de préférence délimité par une première volute 11, formée d'une seule pièce en matériau plastique, par exemple par injection, et par la paroi de séparation 10.

Le second canal de circulation d'air 4 est de préférence délimité par une seconde volute 12, formée d'une seule pièce en matériau plastique, par exemple par injection, et par la paroi de séparation 10.

Le corps 2 est ainsi formé par l'assemblage des volutes 11, 12 et de la paroi de séparation 10.

En fonctionnement, le moteur 7 est démarré de façon à entraîner les roues 5, 6 en rotation. Un premier flux d'air F1 peut alors circuler au travers du premier canal 3, avant de déboucher dans une première zone de l'habitacle du véhicule automobile, par exemple au niveau de buses de dégivrage situées à proximité du pare-brise du véhicule.

Un second flux d'air F2 peut circuler au travers du second canal 4 avant de déboucher dans une seconde zone de l'habitacle du véhicule automobile, par exemple au niveau des buses de pieds disposées en regard des pieds du conducteur et du passager.

Le premier flux d'air F1 et/ou le second flux d'air F2 peuvent être des flux d'air extérieur au véhicule, ou d'air de recyclage issu de l'habitacle, ou encore être un mélange d'air extérieur et d'air de recyclage.

Selon l'invention, le dispositif 1 comporte des premier et second moyens d'entrée du produit nettoyant, débouchant respectivement dans les canaux 3, 4, dans la partie aval 9 du corps 5 et en amont d'au moins un évaporateur, non représenté.

Les premier moyens d'entrée comportent un premier canal d'amenée de produit nettoyant 13 débouchant dans le premier canal de circulation d'air 3 et une première partie de raccordement 14 séparée dudit premier canal d'amenée 13 par des moyens d'obturation, tels par exemple qu'une paroi 15 de faible épaisseur apte à être perforée, par exemple par perçage.

De même, les seconds moyens d'entrée comportent un second canal d'amenée de produit nettoyant 16 débouchant dans le second canal de circulation d'air 4 et une seconde partie de raccordement 17 séparée dudit second canal d'amenée par des moyens d'obturation, tels par exemple qu'une paroi 18 de faible épaisseur apte à être perforée, par exemple par perçage.

Chaque canal d'amenée de produit nettoyant 13, 16 comporte une portion coudée 19 en forme générale d'arc de cercle.

Chaque partie de raccordement 14, 17 comporte un évidement 20 comprenant une première partie tronconique 21 débouchant à l'opposé de la paroi d'obturation, prolongée en direction de la paroi d'obturation correspondante par une seconde partie tronconique 22 puis par une partie cylindrique 23 de plus faible section dont le fond est obturé par ladite paroi d'obturation 15, 18, lorsque celle-ci n'est pas perforée.

Plus particulièrement, la cloison de séparation 10 forme une partie des premier et second canaux d'amenée de produit nettoyant 13, 16.

En particulier, la paroi de séparation 10 forme un moyen de séparation 10a des premier et second canaux d'amenée de produit nettoyant 13, 16.

En outre, la volute 12 forme une partie des premier et second canaux d'amenée de produit nettoyant 13, 16, ladite volute 12 formant en outre les première et seconde parties de raccordement 14, 17 ainsi que les parois d'obturation correspondantes 15, 18. Enfin, la volute 11 forme une partie du premier canal d'amenée de produit nettoyant 13. On limite ainsi le nombre de pièce à réaliser et à assembler.

Lors du fonctionnement, de l'eau se condense dans l'évaporateur, formant un terrain favorable au développement de bactéries et de mauvaises odeurs. Une partie de ces bactéries et odeurs peut alors être entrainée avec le flux d'air F1, F2 et contaminer l'ensemble du circuit de ventilation ainsi que l'habitacle.

Afin de remédier à cet inconvénient, il peut être procédé comme suit.

On perfore tout d'abord la paroi 15, 18, par exemple par perçage. On injecte ensuite du produit nettoyant dans les canaux 3, 4, ce produit étant entraîné par les flux d'air F1, F2 jusque dans les évaporateurs, situés en aval. A cet effet, un tube flexible peut être introduit dans les évidements 20 et dans les canaux 13, 16, les portions courbes 19 pouvant servir à guider et à fléchir le tube flexible. En variante, il est également possible de raccorder une partie dite « mâle » d'une conduite dans chaque évidement, cet évidement formant alors une partie dite « femelle », le produit nettoyant issu de la conduite traversant la paroi perforée et la partie d'amenée correspondante avant de déboucher dans le canal 3, 4 correspondant.

## Revendications

1. Dispositif (1) de chauffage, ventilation et/ou climatisation pour un véhicule automobile, comprenant au moins un premier canal de circulation d'air (3), au moins un second canal de circulation d'air (4), des moyens (5, 6) de génération d'un flux d'air (F1, F2) dans le premier canal (3) de circulation d'air et/ou dans le second canal (4) de circulation d'air, le dispositif (1) comportant en outre des moyens d'entrée d'un produit nettoyant débouchant dans le premier canal de circulation d'air (3) et/ou dans le second canal de circulation d'air (4), **caractérisé en ce que** les premier moyens d'entrée comportent un premier canal d'amenée de produit nettoyant (13) débouchant dans le premier canal de circulation d'air (3) et les seconds moyens d'entrée comportent un second canal d'amenée de produit nettoyant (16) débouchant dans le second canal de circulation d'air (4), le premier canal de circulation d'air (3) étant formé au moins en partie, par une première volute (11), le second canal de circulation d'air (4) étant formé, au moins en partie, par une seconde volute (12), les premier et second canaux de circulation d'air étant séparés l'un de l'autre, au moins en partie, par une cloison de séparation (10).

2. Dispositif (1) selon la revendication 1, dans lequel au moins un évaporateur est situé en aval du premier canal de circulation d'air (3) et/ou en aval du second canal de circulation d'air (4), les moyens d'entrée du produit nettoyant (13, 16) étant situés en amont de l'évaporateur, dans le sens de circulation du flux d'air correspondant (F1, F2).

3. Dispositif (1) selon la revendication 1 ou 2, **caractérisé en ce que** les moyens d'entrée du produit nettoyant (13, 16) sont situés en aval des moyens (5, 6) de génération du flux d'air correspondant (F1, F2), dans le sens de circulation dudit flux d'air (F1, F2).

4. Dispositif (1) selon l'une des revendications 1 à 3, **caractérisé en ce que** les premiers moyens d'entrée comportent un premier canal d'amenée de produit nettoyant (13) débouchant dans le premier canal de circulation d'air (13) et première une partie de raccordement (14) séparée dudit premier canal d'amenée (13) par des moyens d'obturation (15), et les seconds moyens d'entrée comportent un second canal d'amenée de produit nettoyant (16) débouchant dans le second canal de circulation d'air (4) et une seconde partie de raccordement (17) séparée dudit second canal d'amenée (16) par des moyens d'obturation (18).

5. Dispositif (1) selon la revendication 4, **caractérisé en ce que** les moyens d'obturation comportent au moins une paroi (15, 18) apte à être perforée.

6. Dispositif (1) selon la revendication 4 ou 5, **caractérisé en ce qu'**un des canaux d'amenée de produit nettoyant (13, 16) comporte une portion coudée (19) en forme générale d'arc de cercle.

7. Dispositif (1) selon l'une des revendications 1à 6, **caractérisé en ce que** le premier canal d'amenée de produit nettoyant (13) et le second canal d'amenée de produit nettoyant (16) viennent de matière, au moins en partie, avec la cloison de séparation (10).

8. Dispositif (1) selon l'une des revendications 1 à 7, **caractérisé en ce que** le premier canal d'amenée de produit nettoyant (13), le second canal d'amenée de produit nettoyant (16), les parties de raccordement correspondantes (14, 17) et/ou les moyens d'obturation correspondants (15, 18), viennent de matière, au moins en partie, avec la première volute (11) et/ou avec la seconde volute (12).

9. Véhicule automobile comportant au moins un dispositif (1) selon l'une des revendications 1 à 8.

## Patentansprüche

1. Heizungs-, Lüftungs- und/oder Klimatisierungsvorrichtung (1) für ein Kraftfahrzeug, welche wenigstens einen ersten Luftzirkulationskanal (3), wenigstens einen zweiten Luftzirkulationskanal (4) und Mittel (5, 6) zur Erzeugung eines Luftstroms (F1, F2) im ersten Luftzirkulationskanal (3) und/oder im zweiten Luftzirkulationskanal (4) umfasst, wobei die Vorrichtung (1) außerdem Einlassmittel für ein Reinigungsmittel aufweist, die in den ersten Luftzirkulationskanal (3) und/oder in den zweiten Luftzirkulationskanal (4) münden, **dadurch gekennzeichnet, dass** die ersten Einlassmittel einen ersten Reinigungsmittel-Zuführkanal (13) aufweisen, der in den ersten Luftzirkulationskanal (3) mündet, und die zweiten Einlassmittel einen zweiten Reinigungsmittel-Zuführkanal (16) aufweisen, der in den zweiten Luftzirkulationskanal (4) mündet, wobei der erste Luftzirkulationskanal (3) wenigstens teilweise von einem ersten Abdeckungsgehäuse (11) gebildet wird, der zweite Luftzirkulationskanal (4) wenigstens teilweise von einem zweiten Abdeckungsgehäuse (12) gebildet wird und der erste und zweite Luftzirkulationskanal durch eine Trennwand (10) wenigstens teilweise voneinander getrennt sind.

2. Vorrichtung (1) nach Anspruch 1, wobei sich wenigstens ein Verdampfer stromabwärts des ersten Luftzirkulationskanals (3) und/oder stromabwärts des zweiten Luftzirkulationskanals (4) befindet, wobei sich die Einlassmittel für das Reinigungsmittel (13, 16) stromaufwärts des Verdampfers befinden, bezogen auf die Strömungsrichtung des entsprechenden Luftstroms (F1, F2).

3. Vorrichtung (1) nach Anspruch 1 oder 2, **dadurch gekennzeichnet, dass** sich die Einlassmittel für das Reinigungsmittel (13, 16) stromabwärts der Mittel (5, 6) zur Erzeugung des entsprechenden Luftstroms (F1, F2) befinden, bezogen auf die Strömungsrichtung des Luftstroms (F1, F2).

4. Vorrichtung (1) nach einem der Ansprüche 1 bis 3, **dadurch gekennzeichnet, dass** die ersten Einlassmittel einen ersten Reinigungsmittel-Zuführkanal (13), der in den ersten Luftzirkulationskanal (3) mündet, und einen ersten Anschlussteil (14), der von dem ersten Zuführkanal (13) durch Verschlussmittel (15) getrennt ist, aufweisen und die zweiten Einlassmittel einen zweiten Reinigungsmittel-Zuführkanal (16), der in den zweiten Luftzirkulationskanal (4) mündet, und einen zweiten Anschlussteil (17), der von dem zweiten Zuführkanal (16) durch Verschlussmittel (18) getrennt ist, aufweisen.

5. Vorrichtung (1) nach Anspruch 4, **dadurch gekennzeichnet, dass** die Verschlussmittel wenigstens eine Wand (15, 18) aufweisen, die dafür ausgelegt ist, perforiert zu werden.

6. Vorrichtung (1) nach Anspruch 4 oder 5, **dadurch gekennzeichnet, dass** einer der Reinigungsmittel-Zuführkanäle (13, 16) einen gebogenen Abschnitt (19) mit einer kreisbogenförmigen allgemeinen Form aufweist.

7. Vorrichtung (1) nach einem der Ansprüche 1 bis 6, **dadurch gekennzeichnet, dass** der erste Reinigungsmittel-Zuführkanal (13) und der zweite Reinigungsmittel-Zuführkanal (16) mit der Trennwand (10) wenigstens teilweise stoffschlüssig verbunden sind.

8. Vorrichtung (1) nach einem der Ansprüche 1 bis 7, **dadurch gekennzeichnet, dass** der erste Reinigungsmittel-Zuführkanal (13), der zweite Reinigungsmittel-Zuführkanal (16), die entsprechenden Anschlussteile (14, 17) und/oder die entsprechenden Verschlussmittel (15, 18) mit dem ersten Abdeckungsgehäuse (11) und/oder mit dem zweiten Abdeckungsgehäuse (12) wenigstens teilweise stoffschlüssig verbunden sind.

9. Kraftfahrzeug, welches wenigstens eine Vorrichtung (1) nach einem der Ansprüche 1 bis 8 aufweist.

## Claims

1. Heating, ventilation and/or air-conditioning device (1) for a motor vehicle, comprising at least one first air circulation duct (3), at least one second air circulation duct (4), means (5, 6) for generating a flow of air (F1, F2) in the first air circulation duct (3) and/or in the second air circulation duct (4), the device (1) further comprising inlet means for a cleaning product opening into the first air circulation duct (3) and/or into the second air circulation duct (4), **characterized in that** the first inlet means comprise a first cleaning product supply duct (13) opening into the first air circulation duct (3) and the second inlet means comprise a second cleaning product supply duct (16) opening into the second air circulation duct (4), the first air circulation duct (3) consisting, at least in part, of a first volute (11) the second air circulation duct (4) consisting, at least in part, of a second volute (12), the first and second air circulation ducts being separated from one another, at least in part, by a separating partition (10).

2. Device (1) according to Claim 1, wherein at least one evaporator is located downstream of the first air circulation duct (3) and/or downstream of the second air circulation duct (4), the cleaning product inlet means (13, 16) being located upstream of the evaporator, in the direction of circulation of the corresponding air flow (F1, F2).

3. Device (1) according to Claim 1 or 2, **characterized in that** the cleaning product inlet means (13, 16) are located downstream of the means (5, 6) for generating the corresponding air flow (F1, F2), in the direction of circulation of said air flow (F1, F2).

4. Device (1) according to one of Claims 1 to 3, **characterized in that** the first inlet means comprise a first cleaning product supply duct (13) opening into the first circulation duct (3) and a first connection part (14) separated from said first supply duct (13) by closure means (15), and the second inlet means comprise a second cleaning product supply duct (16) opening into the second air circulation duct (4) and a second connection part (17) separated from said second supply duct (16) by closure means (18).

5. Device (1) according to Claim 4, **characterized in that** the closure means comprise at least one wall (15, 18) that can be perforated.

6. Device (1) according to Claim 4 or 5, **characterized in that** one of the cleaning product supply ducts (13, 16) comprises an elbow portion (19) having the general shape of an arc of a circle.

7. Device (1) according to one of Claims 1 to 6, **characterized in that** the first cleaning product supply duct (13) and the second cleaning product supply duct (16) are integral, at least in part, with the separating partition (10).

8. Device (1) according to one of Claims 1 to 7, **characterized in that** the first cleaning product supply duct (13), the second cleaning product supply duct (16), the corresponding connection parts (14, 17) and/or the corresponding closure means (15, 18) are integral, at least in part, with the first volute (11) and/or with the second volute (12).

9. Motor vehicle comprising at least one device (1) according to one of Claims 1 to 8.
